Europäisches Patentamt

European Patent Office

Office européen des brevets

(11) Veröffentlichungsnummer: **0 498 070 A1**

# EUROPÄISCHE PATENTANMELDUNG

(21) Anmeldenummer: **91121615.8**

(22) Anmeldetag: **17.12.91**

(51) Int. Cl.⁵: **B65D 47/26**

(30) Priorität: **05.02.91 DE 9101290 U**

(43) Veröffentlichungstag der Anmeldung:
**12.08.92 Patentblatt 92/33**

(84) Benannte Vertragsstaaten:
**DE ES FR GB IT SE**

(71) Anmelder: **Ott, Siegfried**
**Waginger Strasse 46**
**W-8221 Traunstein-Hufschlag(DE)**
Anmelder: **Mayer, Franz**
**Puchhausen 107**
**W-8317 Mengkofen(DE)**

(72) Erfinder: **Ott, Siegfried**
**Waginger Strasse 46**
**W-8221 Traunstein-Hufschlag(DE)**
Erfinder: **Mayer, Franz**
**Puchhausen 107**
**W-8317 Mengkofen(DE)**

(74) Vertreter: **Meyer-Roxlau, Reiner Ferdinand,**
**Dipl.-Ing.**
**Anwaltskanzlei Wey & Partner**
**Widenmeyerstrasse 49**
**W-8000 München 22(DE)**

(54) **Selbstschliessender Verschluss.**

(57) Bei einem selbstschließenden Verschluß für einen Füllstutzen bestehend aus einem Gehäuse-Unterteil mit flacher Innnenbodenfläche und Durchlaßöffnung, aus einer zwischen einer Schließ- und einer Öffnungsstellung verschwenkbaren Schließplatte, die durch eine Feder in Richtung auf die Schließstellung gedrückt ist, aus einer Ringdichtung zwischen der Schließplatte und der Innenbodenfläche zur Abdichtung der Durchlaßöffnung und aus einem Gehäuse-Oberteil mit einer zur Innenbodenfläche parallelen inneren Abdeckfläche mit Durchlaßöffnung in fluchtender Anordnung zur Durchlaßöffnung im Gehäuse-Unterteil, ist in Hinblick auf eine geringe Bauhöhe die Schließplatte (12) zwischen der Innenbodenfläche (2) und der Abdeckplatte (17) parallel zu diesen verschwenkbar; die Schließplatte (12) steht zu ihrer Verschwenkung gegen die Wirkung der Feder (13) in die Öffnungsstellung mit einem Griffelement in Verbindung; sie weist des weiteren eine Durchtrittsöffnung (22) auf, die in der Öffnungsstellung der Schließplatte (12) mit den Durchlaßöffnungen (5 bzw. 18) der Innenbodenfläche (2) und der Abdeckfläche (17) fluchtet.

Fig. 1

Die Erfindung betrifft einen selbstschließenden Verschluß für einen Füllstutzen gemäß Oberbegriff des Anspruchs 1.

Der aus der DE 39 18 941-A1 bekannte Verschluß für den Füllstutzen von Kraftstofftanks weist eine seitlich zur Durchlaßöffnung des Gehäuse-Unterteils versetzte und zu diesem parallele Schwenkachse für die Schließplatte auf. Eine Schenkelfeder (Wäschefeder), angeordnet an der Schwenkachse, ist einerseits am Gehäuse-Unterteil verankert und drückt andererseits die Schließplatte gegen das Gehäuse-Unterteil. Zum Betanken wird die sogenannte Zapfpistole durch die äußere Durchlaßöffnung des Verschlusses hindurchgeführt, wobei sie gleichzeitig die Schließplatte verschwenkt und durch die Durchlaßöffnung im Gehäuse-Unterteil hindurchgeführt wird. Nach dem Zurückziehen der Zapfpistole wird die Schließplatte unter der Wirkung der Feder in die Schließstellung zurückverschwenkt.

Der bekannte Verschluß besitzt eine nicht unerhebliche Bauhöhe und eignet sich bereits aus diesem Grunde nicht für die Anordnung am Füllstutzen des Ventildeckels eines Motors, wo nur ein geringer Abstand zur Motorhaube besteht. Ferner ist die Schließplatte nur durch die Feder in der Schließstellung gehalten, so daß heftige Schwingungen, wie sie an einem Motorblock auftreten können, die Abdichtung gefährden, wenn der bekannte Verschluß an einem Ventildeckel Verwendung findet. Schließlich läßt sich auf der Schließplatte etwa befindlicher Schmutz kaum wegwischen ohne die Gefahr der Verschwenkung der Schließplatte in die Öffnungsstellung, so daß solcher Schmutz Zutritt zum Motor findet.

Da nach Füllvorgängen gelegentlich vergessen wird, die herkömmlichen Drehdeckelverschlüsse von Öl-Füllstutzen wieder aufzusetzen und fest anzuziehen, besteht zur Verhinderung der auf einem solchen Vergessen beruhenden Gefahren für einen ordnungsgemäßen Motorbetrieb der Bedarf nach einem selbstschließenden Verschluß, wie er als Tankverschluß bereits bekannt ist.

Der Erfindung liegt daher die Aufgabe zugrunde, ausgehend von dem eingangs bezeichneten Verschluß, der allerdings als Tankverschluß gestaltet ist, diesen so weiterzubilden, daß er sich als Verschluß für einen Öl-Einfüllstutzen bei einem Motor eignet; dabei ist auf geringe Bauhöhe, Unempfindlichkeit gegen Schwingungen und die Möglichkeit einer einfachen außenseitigen Reinigung ohne Gefahr des Schmutzdurchtritts durch den Verschluß zu achten. Im übrigen ist bei der neuen Gestaltung auf Einfachheit und Preiswürdigkeit zu achten. Der neue Verschluß soll schließlich problemlos als Ersatz für herkömmliche Drehdeckelverschlüsse verwendbar sein.

Dieser Aufgabe wird durch die Merkmale des kennzeichnenden Teils des Anspruch 1 in Verbindung mit den Merkmalen des Oberbegriffs desselben gelöst.

Vorteilhafte Weiterbildungen sind aus den Unteransprüchen zu ersehen.

Bei der erfindungsgemäßen Ausbildung ist die Schließplatte erstmalig nicht um eine zur Mittelachse der Füllstutzenöffnung rechtwinklige Achse schwenkbar, was eine Reinigung der Schließplattenoberseite, soweit diese von außen sichtbar ist, zuläßt, ohne daß Schmutzpartikel in den Motorbereich durchtreten können. Die vorgesehene Verschwenkbarkeit der Schließplatte gewährleistet im übrigen eine sehr geringe Bauhöhe des Verschlusses In seiner Gesamtheit. Des weiteren können Schwingungen die Schließplatte nicht zu Verschwenkungen aus der Schließstellung heraus führen, weil durch die vorgesehene Verschwenkbarkeit erst sehr große Schwenkwege zu einer Teilöffnung führen und die auftretenden Schwingungen hierfür nicht ausreichen. Außerdem läßt sich durch entsprechend enge Zuordnung von Gehäuse-Unterteil und -Oberteil eine nur stramm gehende Verschwenkbarkeit der Schließplatte bewirken, so daß sie Praktische schwingungsunempfindlich ist.

Die erfindungsgemäß vorgesehene Verschwenkbarkeit der Schließplatte ist in besonders einfacher Weise dann erreichbar, wenn eine rechtwinklig zur Innenbodenfläche und seitlich der Durchlaßöffnung derselben angeordnete Schwenkachse vorgesehen ist. Dies führt zu einer sehr einfachen Bauweise des Verschlusses in seiner Gesamtheit.

Zur Erreichung der notwendigen Dichtigkeit des Verschlusses in seiner Gesamtheit, und zwar in optimaler Gestaltung, empfiehlt sich die Vorsehung von Ringdichtungen beidseitig der Schließplatte, also im Gehäuse-Unterteil und -Oberteil bei Anordnung in dort vorgesehenen Ringnuten. Solche Dichtungen verbessern die Führung und korrekte Lage der Schließplatte während ihrer Schwenkbewegung und lassen selbst bei verhältnismäßig strammer Zuordnung von Gehäuse-Unterteil und -Oberteil wegen der dann bestehenden Elastizität in den Dichtungen eine einwandfreie Verschwenkbarkeit der Schließplatte zu.

Für die schwenkbewegliche Lagerung der Schließplatte ebenso wie für die Anordnung einer Feder zur Rückstellung der Schließplatte in die Schließstellung empfiehlt sich die Vorsehung von Zapfen, insbesondere Einsteckzapfen, im Gehäuse-Unterteil, was zu einer vereinfachten Herstellung des Unterteils führt. Es aber grundsätzlich auch möglich, die Schwenkachse an der Schließplatte selbst anzuformen oder festzulegen und in einer passenden Ausnehmung des Gehäuse-Unterteils zu lagern.

Zur einwandfreien Definition der Öffnungs- und Schließstellung der Schließplatte empfiehlt sich die Ausbildung eines Ringsteg am Gehäuse-Unterteil auf dessen dem Oberteil zugewandten Seite, wobei die Ringsteg-Innenseite Endanschläge für die Schließplatte bildet.

Hierbei kann dann im übrigen eine kreisförmige Innenkontur des Ringstegs und eine im wesentlichen linsenförmige Umfangskontur der Schließplatte vorgesehen werden, wobei letztere zwei Kreisbogenlinien aufweist, deren Radien etwa dem Radius der Innenkontur des Ringstegs entsprechen und die über schmale Endbereiche der Schließplatte miteinander in Verbindung stehen, wobei in einem derselben die Schwenkachse gelagert ist. Dies führt wiederum zu einem sehr einfachen Aufbau des erfindungsgemäßen Verschlusses bei zugleich preiswerter Herstellbarkeit.

Gehäuse-Unterteil und -Oberteil sollten zweckmäßigerweise über ein Gewinde gegeneinander verdrehbar sein, das zugleich ihrer gegenseitigen Fixierung dient, wobei im übrigen die Schließplatte durch Verdrehung des Gehäuse-Oberteils gegen über dem Unterteil verschwenkbar ist. Die hierbei gewährleistete rotationssymmetrische Gestaltung von Oberteil und Unterteil gewährleisten eine spannungsfreie Herstellbarkeit der Teile im Wege bspw. des Spritzgießens von Kunststoff.

Für die Verschwenkbarkeit der Schließplatte durch Verdrehung des Gehäuse-Oberteils gegenüber dem Unterteil kann in einfacher Ausbildung in der Schließplatte eine Nut zum Eingriff eines in der Abdeckfläche des Gehäuse-Oberteils vorsehenden Zapfens vorgesehen werden, so daß es keiner besonderen Maßnahmen für die Realisierbarkeit der Verschwenkung der Schließplatte bedarf, die mit zusätzlichem Konstruktion- und Kostenaufwand verbunden wären.

Die für die Rückstellbewegung der Schließplatte vorgesehene Feder kann praktisch beliebiger Art sein, also bspw. eine auf die zugehörige Seitenfläche der Schließplatte einwirkende Druckfeder. Bevorzugt ist jedoch eine auf einem besonderen Zapfen aufzusetzende Schraubenfeder zu verwenden, deren beide Enden radial nach außen ausgespreizt sind und die insgesamt als Torsionsfeder wirkt. An Stelle einer mechanischen Feder kann aber durchaus auch eine "magnetische" Feder verwendet werden, nämlich ein Magnet, der die Schließplatte durch Anziehen oder Wegdrücken in die Schließstellung bewegt; in diesem Fall muß die Schließplatte aus einem magnetisch anziehbaren Material bestehen. Bei Anordnung des Magnets an der Schließplatte ist dies zwar nicht notwendig, muß aber entsprechendes Material der Magnetanordnung an der Schließplatte gegenüber liegend am Verschlußgehäuse vorgesehen sein.

Gehäuse-Unterteil und -Oberteil können an Stelle einer Rundumverbindung auch nur stellenweise miteinander verbunden sein, wobei durch den frei gehaltenen Bereich eine Handhabe zur Verschwenkung der Schließplatte hindurchführbar ist. Auch in diesem Fall kann selbstverständlich eine selbstständige Rückstellung der Schließplatte in die Schließstellung durch Federwirkung vorgesehen sein. Abgesehen von der nur stellenweisen Verbindung von Gehäuse-Unterteil und -Oberteil können alle übrigen vorerwähnten Merkmale mit Ausnahme der Verschwenkung der Schließplatte durch gegenseitige Verdrehung der beiden Gehäuseteile, nämlich unter unmittelbarer Einwirkung des Oberteils auf die Schließplatte, realisiert werden.

Anstelle des genannten Gewindes zwischen Gehäuse-Unterteil und -Oberteil kann beim einen Teil eine Umfangsrille und beim anderen Teil eine Umfangsrippe vorgesehen werden, die gegenseitig zur Verrastung gebracht werden; diese Ausbildung läßt ebenso eine Verdrehbarkeit wie bei der Vorsehung eines Gewindes zu. Im Falle der Vorsehung eines Gewindes sollte dies so ausgewählt werden, daß die beiden Gehäuseteile bei ihrer Relativverdrehung dann auseinander bewegt werden, wenn die Schließplatte in ihrer Öffnungsstellung verschwenkt wird, und aufeinanderzu bewegt werden, wenn die Schließplatte in ihre Schließstellung bewegt wird. Dies gewährleistet eine Verbesserung der Abdichtung während der Bewegung der Schließplatte in die Schließstellung.

Nachfolgend wird die Erfindung anhand einer bevorzugten Ausführungsform und unter Bezugnahme auf die Zeichnung ausschließlich beispielhaft weiter ins einzelne gehend beschrieben. In der Zeichnung zeigen:

Fig. 1 einen Verschluß für den Öl-Einfüllstutzen eines Verbrennungsmotors im Aufriß mit abgenommenen Gehäuse-Oberteil und

Fig. 2 eine Ansicht gemäß Linie II-II der Fig. 1.

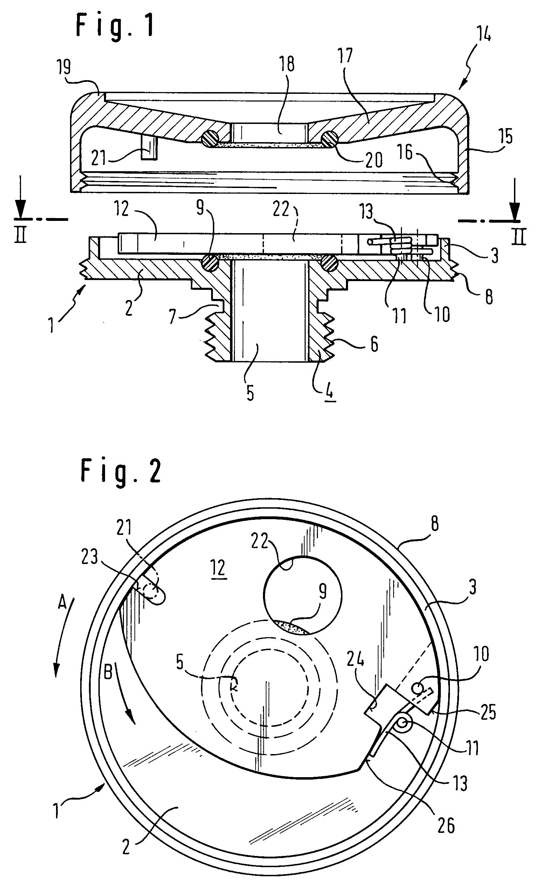

Die nachfolgend verwendeten Raum- und Richtungsangaben wie "oben", "unten" ect. betreffend die Anordnung in der Zeichnung. Die räumliche Einbaulage des Verschlusses auf dem Zylinderkopf eines Motors entspricht der Darstellung der Fig. 1.

Ein Gehäuse-Unterteil 1 weist eine flache, im wesentlichen kreisförmige Innenbodenfläche 2 auf, nahe deren Umfang ein nach oben weisender Ringsteg 3 umläuft, während an der Unterseite ein Hohlstutzen 4 ausgebildet ist. Das Unterteil 1 weist eine Durchlaßöffnung 5 auf, an die das Innere des Hohlstutzens 4 anschließt, der ein Außengewinde 6 aufweist. Dieses Gewinde 6 ist oben durch eine Ringnut 7 zur Aufnahme einer Ringdichtung und/oder Gewindesicherung (nicht dargestellt) begrenzt.

Außenseitig des Unterteils 1 ist ein Außengewinde 8 vorgesehen, dessen Gewindestege radial auswärts über die Außenkontur des Ringstegs 3 überstehen, so daß dieser das Aufschieben eines zugehörigen Innengewindes nicht behindert.

An der Innenbodenfläche 2 ist um die Durchlaßöffnung 5 herum eine O-Ringdichtung 9 in einer Ringnut so eingesetzt, daß die Dichtung 9 geringfügig über die Innenbodenfläche 2 vorsteht.

Aus der Innenbodenfläche 2 stehen außermittig zwei Zapfen 10 und 11 senkrecht nach oben vor, nämlich als Schwenkachse 10 für eine Schließplatte 12 und als Halter 11 für den wendelförmigen Abschnitt einer Schenkelfeder 13, die sich mit dem einen Schenkel an der Schwenkachse 10 und dem anderen Schenkel an der Schließplatte 12 abstützt. Die Schließplatte 12 liegt mit ihrer zur Innenbodenfläche 2 parallelen flachen Unterseite auf der O-Ringdichtung 9 auf.

Ein Gehäuse-Oberteil 14, im wesentlichen in der Form einer nach unten offenen kurzen Dose, besitzt an seiner Umlaufwand 15 innenseitig und nahe der unteren freien Kante desselben ein Innengewinde 16 zum Eingriff in das Außengewinde 8 des Gehäuse-Unterteils 1. Oben ist das Gehäuse-Oberteil 14 durch eine innere Abdeckfläche 17 mit mittiger Durchlaßöffnung 18 verschlossen, die mit der Durchlaßöffnung 5 im Gehäuse-Unterteil 1 fluchtet. Die der inneren Abdeckfläche 17 gegenüberliegende Außenfläche des Gehäuse-Oberteils 14 ist in Richtung auf die Durchlaßöffnung 18 muldenförmig vertieft, wobei umfangsseitig ein Umfangswulst 19 die Mulde begrenzt.

An der inneren Abdeckfläche 17 ist um die Durchlaßöffnung 18 herum eine O-Ringdichtung 20 in einer Nut so eingesetzt, daß die Dichtung 20 geringfügig über die Abdeckfläche 17 vorsteht. Die beiden einander gegenüber liegenden Flächen der Schließplatte 12 sind so glatt ausgebildet, daß sie in Zusammenwirkung mit den O-Ringdichtungen 9 und 20 als Dichtflächen wirken. Die Abdichtung mittels der Dichtungen 9 und 20 ist dann erreicht, wenn die beiden Gehäuseteile 1 und 14 miteinander verschraubt sind.

Aus der inneren Abdeckfläche 17 steht ein Zapfen 21 nach unten vor, zweckmäßigerweise als Einpreßzapfen, der in eine Nut 23 der Schließplatte 12 eingreift und der Verschwenkung der Schließplatte 12 mittels des Gehäuse-Oberteils 14 dient.

Zum Zusammenbau des Verschlusses werden zunächst die Feder 13 auf den Zapfen 11 und anschließend die Schließplatte 12 auf den Zapfen 10 aufgesetzt, wonach einer der Schenkel der Feder 13 an einer Seitenfläche der Schließplatte 12 zur Anlage gebracht wird. Danach wird das Gehäuse-Oberteil 14 auf das Gehäuse-Unterteil 1 geschraubt und dabei in eine solche Relativstellung zum Unterteil gebracht, in der eine im Oberteil 14 vorgesehene Aufnahmebohrung für den Zapfen 21 der Nut 23 in der Schließplatte 12 gegenüberliegt, so daß dann der Zapfen 21 zum Eingriff in die Nut 23 in das Oberteil 14 einpreßbar ist.

Die Schließplatte 12 ist im Detail in Fig. 2 dargestellt; sie weist eine insgesamt etwa linsenförmige Umfangskontur auf, die im wesentlichen von zwei Kreisbogenlinien bestimmt ist; letztere stehen über verhältnismäßig schmale Endbereiche der miteinander in Verbindung. An dem einen Endbereich ist eine deutlich erkennbare Aussparung für die Feder 13 vorgesehen. Der Radius der beiden Kreisbogenlinien stimmt mit dem Innenradius des Ringstegs 3 des Unterteils 1 im wesentlichen überein. Der Schwenkpunkt der Schließplatte 12, nämlich die Schwenkachse 10, ist so festgelegt, daß die Schließplatte 12 in der Schließ- bzw. Öffnungsstellung jeweils an einer der beiden Kreisbogenlinien am Innenumfang des Ringstegs 3 anliegt. In der Schließplatte 12 ist eine Durchtrittsöffnung 22 ausgebildet, die in der Öffnungsstellung mit den Durchlaßöffnungen 5 bzw. 18 fluchtet. Dagegen ist in der Schließstellung die Durchtrittsöffnung 22 gegenüber den beiden Durchlaßöffnungen 5 und 18 bzw. den zugehörigen Ringdichtungen 9 bzw. 20 soweit versetzt, daß die genannten Durchlaßöffnungen über die genannten Ringdichtungen an der jeweils zugewandten Fläche der Schließplatte 12 abgedichtet sind und damit keine Verbindung von der Durchlaßöffnung 5 des Gehäuse-Unterteils 1 zur Durchlaßöffnung 18 des Gehäuse-Oberteils 14 besteht.

Die bereits genannte Nut 23 und die zur Aufnahme der Schwenkachse 10 erforderliche Bohrung in der Schließplatte 12 befinden sich an einander gegenüberliegenden Endbereichen der Schließplatte 12. Die Nut 23 geht nahe des zugehörigen Endbereichs der Schließplatte von derjenigen Kreisbogenlinie aus, die in der Schließstellung gegen den Innenumfang des Ringstegs 3 anliegt; die Nut 23 erstreckt sich etwa in Richtung auf den anderen Endbereich der Schließplatte 12 und kann letztere hinsichtlich ihrer Dicke gänzlich oder teilweise durchsetzen.

Der Nut 23 gegenüber liegend ist an der Schließplatte 12 eine Aussparung 24 vorgesehen, um die Feder 13 mühelos einsetzen zu können. Des weiteren ist dort eine Abschrägung 25 vorgesehen, um die durch den Ringsteg 3 unbehinderte Schwenkbewegung der Schließplatte 12 zu ermöglichen.

Im Bereich der Schwenkachse 10 ist die Schließplatte 12 zur Bildung eine Stufe dünner ausgebildet. Der hierdurch ausgesparte Raum dient der Aufnahme des gegen die Schwenkachse 10 anliegenden Schenkels der Feder 13. Der andere Schenkel der Feder 13 ist bis auf die Höhe der halben Dicke der Schließplatte 12 nach unten abgebogen und sitzt in einer in der Zeichnung nicht erkennbaren Rille in einer Anlagefläche 26 der Schließplatte 12. Abgesehen von den Zapfen 10, 11 und 21 und den Ringdichtungen 9 und 20 sind zweckmäßigerweise aus einem Kunststoff herzustellen, der öl- und zugleich hitzebeständig ist.

Zum Einfüllen bspw. Öl in einen mittels des Verschlusses verschlossenen Einfüllstutzen ist das Gehäuse-Oberteil 14 an seiner Umlaufwand 15 zu erfassen und in Richtung des Pfeils A gegenüber dem Gehäuse-Unterteil 1 zu verdrehen. Hierbei nimmt der Zapfen 21 die Schließplatte 12 unter Verschwenkung gegen die Feder 13 in Richtung des Pfeils B mit, bis die Schließplatte 12 die Öffnungsstellung erreicht. Wegen des dabei zugleich erreichten Anschlags der Schließplatte 12 an der Innenseite des Ringstegs 3 ist ein Weiterdrehen des Gehäuse-Oberteils 14 gegenüber dem Unterteil 1 nicht möglich. Wird das Gehäuse-Oberteil 14 frei gegeben, so verschwenkt die Feder 13 die Schließplatte 12 wieder in die Schließstellung, und zwar unter Zurückdrehen des Gehäuse-Oberteils 14 gegenüber dem Unterteil 1.

Bei Ausbildung der Gewinde 8 und 16 als Rechtsgewinde vergrößert sich beim Verdrehen des Oberteils 14 in Richtung des Pfeils A der Abstand zwischen Oberteil 14 und Unterteil 1 etwas, so daß die Andruckwirkung der Ringdichtungen 9 und 20 gegen die Schließplatte 12 etwas reduziert wird. Dies erleichtert die Drehbewegung des Oberteils 14 in Richtung des Pfeils A bzw. verbessert beim Schließen die Wirkung der Dichtungen 9 und 20.

**Patentansprüche**

1. Selbstschließender Verschluß für einen Füllstutzen, bestehend aus einem an diesem anbringbaren Gehäuse-Unterteil mit flacher Innenbodenfläche und Durchlaßöffnung in dieser, aus einer zwischen einer Schließ- und einer Öffnungsstellung verschwenkbaren Schließplatte, die durch eine Feder in Richtung auf die Schließstellung gedrückt ist, aus einer Ringdichtung zwischen der Schließplatte und der Innenbodenfläche zur Abdichtung der Durchlaßöffnung in dieser in der Schließstellung der Schließplatte und aus einem an der dem Füllstutzen abgewandten Seite des Gehäuse-Unterteils vorgesehenen Gehäuse-Oberteil mit einer zur Innenbodenfläche parallelen inneren Abdeckfläche mit Durchlaßöffnung in fluchtender Anordnung zur Durchlaßöffnung im Gehäuse-Unterteil, dadurch gekennzeichnet, daß die Schließplatte (12) zwischen der Innenbodenfläche (2) und der Abdeckfläche (17) parallel zu diesen verschwenkbar ist und zu ihrer Verschwenkung gegen die Wirkung der Feder (13) in die Öffnungsstellung mit einem Griffelement in Verbindung steht und eine Durchtrittsöffnung (22) aufweist, die in der Öffnungsstellung der Schließplatte (12) mit den Durchlaßöffnungen (5 bzw. 18) der Innenbodenfläche (2) und der Abdeckfläche (17) fluchtet.

2. Verschluß nach Anspruch 1, dadurch gekennzeichnet, daß die Schließplatte (12) um eine rechtwinklig zur Innenbodenfläche (2) und seitlich der Durchlaßöffnung (5) derselben angeordnete Schwenkachse (10) verschwenkbar ist.

3. Verschluß nach Anspruch 1 oder 2, dadurch gekennzeichnet, daß die Schließplatte (12) auf einer Ringdichtung (9 bzw. 20) in einer die Durchlaßöffnung (5 bzw. 18) umgebenden Ringnut der Innenbodenfläche (2) und/oder der Abdeckfläche (17) abgedichtet aufliegt.

4. Verschluß nach Anspruch 2 oder 3, dadurch gekennzeichnet, daß die Bodenfläche (2) zwei auf die Abdeckfläche (17) gerichtete Vorsprünge bzw. Zapfen aufweist, deren einer einen Halter (11) für die Feder (13) und deren anderer die Schwenkachse (10) der Schließplatte (12) bildet.

5. Verschluß nach mindestens einem der Ansprüche 1 bis 4, dadurch gekennzeichnet, daß das Gehäuse-Unterteil (1) auf seiner dem Gehäuse-Oberteil (14) zugewandten Seite einen umlaufenden Ringsteg (3) aufweist, dessen Innenseite die Schließplatte (12) umgibt und deren Endanschläge in der Schließ- und der Öffnungsstellung bildet.

6. Verschluß nach Anspruch 5, dadurch gekennzeichnet, daß der Ringsteg (3) eine kreisförmige Innenkontur und die Schließplatte (12) eine im wesentlichen linsenförmige Umfangskontur aufweist, wobei letztere zwei Kreisbogenlinien aufweist, deren Radien etwa dem Radius der Innenkontur des Ringstegs (3) ensprechen und die über verhältnismäßig schmale Endbereiche der Schließplatte (12) miteinander in Verbindung stehen, wobei die Schließplatte (12) im Bereich des einen Endbereichs auf der Schwenkachse (10) gelagert ist.

7. Verschluß nach mindestens einem der Ansprüche 1 bis 6, dadurch gekennzeichnet, daß das Gehäuse-Oberteil (14) gegenüber dem Gehäuse-Unterteil (1) über ein Gewinde (8, 16) verdrehbar ist, das zugleich ihrer gegenseitigen Fixierung dient, und daß die Schließplatte (12) durch Verdrehung des Gehäuse-Oberteils (14) gegenüber dem Gehäuse-Unterteil (1) verschwenkbar ist.

8. Verschluß nach Anspruch 7, dadurch gekennzeichnet, daß in der der Abdeckfläche (17) zugewandten Fläche der Schließplatte (12) eine Nut (23) ausgebildet ist, in die ein aus der Abdeckfläche (17) vorstehender Zapfen eingreift.

9. Verschluß nach mindestens einem der Ansprüche 1 bis 8, dadurch gekennzeichnet, daß die Außenfläche der Abdeckwand (17) des Gehäuse-Oberteils (14) zur Durchlaßöffnung (18) hin muldenförmig ausgebildet ist.

10. Verschluß nach mindestens einem der Ansprüche 1 bis 9, dadurch gekennzeichnet, daß das Gehäuse-Unterteil (1) an der der Schließplatte (12) abgewandten Seite einen die Durchlaßöffnung (5) umgebenden Hohlstutzen (4) mit Befestigungsmitteln, vorzugsweise als Gewinde (6), aufweist.

11. Verschluß nach Anspruch 10, dadurch gekennzeichnet, daß an der Außenseite des Hohlstutzens (4) Mittel zum Abdichten und zum Sichern der Gewindeverbindung zwischen Einfüllstutzen und Hohlstutzen (4) vorgesehen sind.

12. Verschluß nach mindestens einem der Ansprüche 1 bis 11, dadurch gekennzeichnet, daß das Gehäuse-Unterteil (1), das Gehäuse-Oberteil (14) und die Schließplatte (12) aus einem öl- und hitzebeständigen Kunststoff bestehen.

# Fig. 1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 266 705 (BAYERISCHE MOTOREN WERKE) <br> * Spalte 1, Zeile 1 - Zeile 11 * <br> * Spalte 3, Zeile 52 - Zeile 56 * <br> * Zusammenfassung; Abbildung 2 * <br> --- | 1-3 | B65D47/26 |
| A | EP-A-0 401 459 (OTT) <br><br> ----- | | |

**RECHERCHIERTE SACHGEBIETE (Int. Cl.5)**

B65D
B60K

Der vorliegende Recherchenbericht wurde für alle Patentansprüche erstellt

| Recherchenort | Abschlußdatum der Recherche | Prüfer |
|---|---|---|
| BERLIN | 30 APRIL 1992 | SPETTEL J.D.M.L. |

EPO FORM 1503 03.82 (P0403)